# EUROPÄISCHE PATENTANMELDUNG

(11) **EP 2 984 919 A1**
(43) Veröffentlichungstag der Anmeldung: **17.02.2016**
(21) Anmeldenummer: 14002796.2
(22) Anmeldetag: 11.08.2014
(51) Int. Cl.: A01D 45/26

(54) **Verfahren zum Ernten von Gemüse und Salaten**

(71) Anmelder: König, Rüdiger, 67125 Dannstadt-Schauernheim (DE)
(72) Erfinder: König, Rüdiger, 67125 Dannstadt-Schauernheim (DE)
(74) Vertreter: Lewandowski, Axel

(57) **Zusammenfassung**

Die Anmeldung betrifft eine "Verfahren zum Ernten von Gemüse und Salaten", dadurch gekennzeichnet, dass mittels mindestens einer quer zur Ernterichtung möglichst schmalen Schneideinheit, um eine einzelne Pflanzreihe abernten zu können, das Erntegut von der Wurzel getrennt wird und diese Schneideinheiten durch seitliche, möglichst kurze, in einem möglichst geringen Seitenabstand zur Pflanzreihe angebrachten, in der Höhe einstellbare Auflagen geführt ist, um die Schnitthöhe der Schneideinheit zum Boden an Bodenunebenheiten anzupassen.

## Beschreibung

Die Erfindung betrifft ein Verfahren zum Ernten von Gemüse und Salaten.

Der Anbau von Salat und Gemüse erfolgt auf Feldern üblicherweise in Reihen. Beim Freilandanbau von zum Beispiel Feldsalat werden die Pflanzen im Abstand von wenigen Zentimetern gesät. Die Aussaat erfolgt, wie bisher nur bei nachrangigem Anbau in Gewächshäusern, mit so genannten Schwamm- oder Einzelkornsämaschinen oder als Breitsaat. Im Freilandanbau und im Gewächshausanbau werden zudem auch Presstopfballen-Pflanzen gepflanzt.

In der Regel werden Salat und Gemüse von Hand geerntet. Die Ernte ist witterungsabhängig und aufgrund hoher Lohnaufwendungen kostenintensiv.

Eine besondere Erschwernis bei der Ernte liegt darin, dass die Pflanzen in der Regel eine Höhe von wenigen Zentimetern aufweisen. Hinzutritt, dass die Pflanzen in einem nahezu gleichmäßigen Abstand zum Boden abgetrennt werden müssen.

Aus dem Stand der Technik sind vor allem Handerntemaßnahmen mit Messern oder bei Salaten mit abgekröpften Feldsalatmessern sowie mit Sensen, die mit Auffangnetzen ausgestattet sind, bekannt.

Neben dem manuellen Ernteverfahren sind verschiedene Maschinen zum Ernten von Salat bekannt.

Aus dem Patent EP 1 156 713 B1 ist eine Erntemaschine bekannt, die in Reihen gepflanzten Feldsalat mittels gezackter Messer, die in Richtung der Schneide der Messer über die Oberfläche des Feldes geführt werden und die Salatblätter vom Wurzelwerk abtrennen. Die einzelnen Messer werden durch eine elektrische Höhenverstellung dicht über der Oberfläche des Feldes geführt. Das Oberflächenprofil der Pflanzenreihen wird mittels Sensoren erfasst. Die Schneidmesser werden mittels Stellenantrieben in der Höhe, entweder automatisch mittels dem Signal der Sensoren oder durch manueller Eingabe und einer Regelung in der Höhe zum Boden geregelt. Nachteilig bei dieser Erfindung ist, dass eine kostenintensive Kombination von Bauteilen und Geräten eingesetzt werden muss, um den Abstand der Messer zum Boden nahezu gleichmäßig zu halten. Ebenfalls nachteilig ist, dass die zu verwendenden Geräte und Baugruppen stark schmutzbelastet sind und deshalb ein erheblicher Aufwand betrieben werden muss, um diese zu schützen.

Eine ähnliche Maschine zum Ernten von Feldsalat ist aus der Erfindung EP 0 613 616 B1 bekannt.

Weitere Vorrichtungen zum Abschneiden von niedrig wachsenden, insbesondere mit ihren unteren Blättern einen Untergrund berührenden Kulturpflanzen sind aus DE 20 2004 017 498 U1, DE 10 2007 052 272 A1 und US 6,622,467 B1 bekannt. In diese Schriften wird auch jeweils ein fester Anschlag definiert, der den Abstand zum Boden regelt. Es werden jedoch jeweils die Messer oder Schneideinrichtungen für mehrere Erntereihen eingestellt. Speziell im Freilandanbau, wenn die Beete der Witterung ausgesetzt sind und deshalb, nicht wie im Gewächshaus, uneben sein können, kann dadurch eine der Schneideinheiten oder eines der Messer in den Boden eintauchen oder das Erntegut oberhalb der definierten Schnitthöhe abschneiden.

Eine weitere Erntemaschine für das Ernten von eng am Boden liegenden Pflanzen, ist aus der Erfindung DE 19 2010 006 506 A1 bekannt. Der Ernteprozess besteht in dem Bereitstellen einer Schneidvorrichtung, dem Führen des Schneidmessers auf einem im Wesentlichen konstanten Niveau relativ zur Oberfläche des Feldes, dem Rotieren des Schneidemessers mittels eines Rotationsmittels um eine Rotationsachse und dem Abtrennen eines Teils der Pflanze vom Wurzelwerk. Nachteilig bei dieser Erfindung ist, dass die Schneidmesser ebenfalls einzeln in der Höhe geregelt werden müssen und hierfür ein erheblicher Aufwand betrieben werden muss.

Ausgehend von diesem Stand der Technik liegt der Erfindung insoweit die Aufgabe zugrunde, ein Verfahren anzugeben, das es ermöglicht, Gemüse und Salatpflanzen möglichst konstant in einem definierten Abstand über dem Boden zu ernten, ohne dabei eine spezielle Abstandsregulierung zu verwenden und dabei die Qualität der Ernte zu verbessern, Kosten einzusparen und die Arbeitssicherheit zu erhöhen.

Diese Aufgabe wird dadurch gelöst, dass die einzelnen Pflanzreihen mit jeweils einer einzeln in der Höhe geführten Vorrichtung mit möglichst kurzen Auflagen, die direkt auf dem Beet geführt werden, und die Auflagen möglichst nahe im seitlichen Abstand zu der einzelnen Pflanzenreihe angebracht sind, um eine Anpassung an den Boden zu erreichen und dadurch die Klinge in einem nahezu gleichmäßigen Abstand zum Boden zu führen, und die es dadurch ermöglicht, nur den Pflanzenstand in den Pflanzreihen und nicht unerwünschte Pflanzen zwischen den Reihen zu ernten, und mit Hilfe von geeigneten Sensoren in der Lage ist, in den Pflanzreihen unerwünschte Pflanzen zu erkennen und diese gezielt nicht zu ernten.

Weitere vorteilhafte Ausführungsformen sind in den Unteransprüchen gekennzeichnet.

Das erfindungsgemäße "Verfahren zum Ernten von Gemüse und Salaten" wird nun anhand von bevorzugten Ausführungsbeispielen mit Hilfe der beigefügten Zeichnungen näher erläutert.

Es zeigt:
- Fig. 1: Eine perspektivische Ansicht einer beispielhaften "Vorrichtung für das Verfahren zum Ernten von Gemüse und Salaten".
- Fig. 2: Eine perspektivische Ansicht eines "Verfahrens zum Ernten von Gemüse und Salaten".

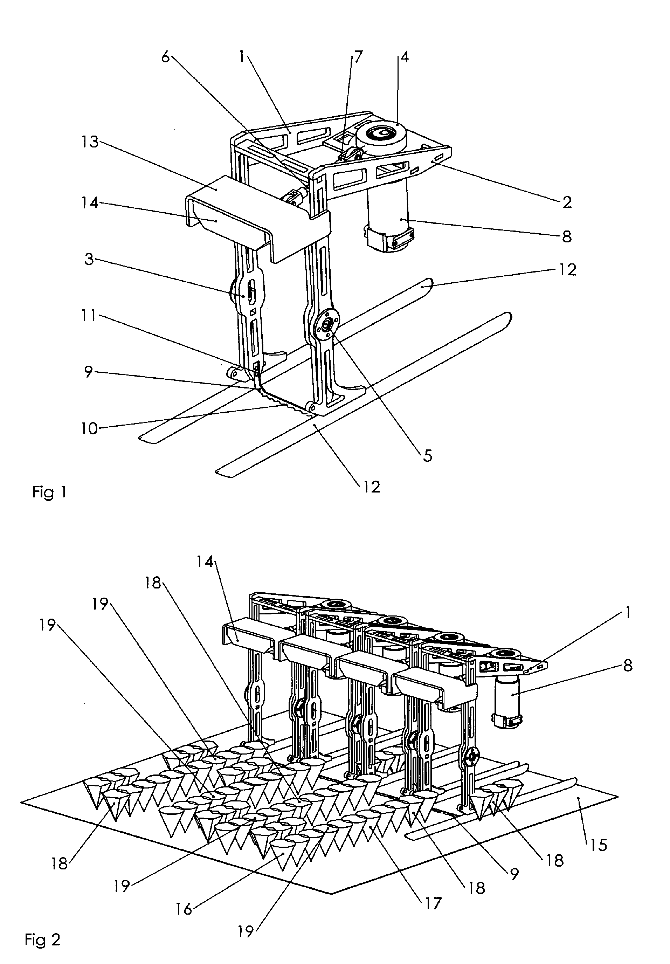

Die Fig. 1 zeigt eine perspektivische Ansicht einer beispielhaften "Vorrichtung für das Verfahren zum Ernten von Gemüse und Salaten". Die Vorrichtung (1) ist auf einem Grundrahmen (2) aufgebaut. Am Grundrahmen (2) sind die beiden Hauptbestandteile der Vorrichtung Wippe (3) und Exzenterantrieb (4) montiert. Die Wippe ist im Aufnahmepunkt (5) drehbar gelagert. Sie ist in der Grundstellung vertikal ausgerichtet. Am oberen Ende der Wippe (3) ist die Koppelstange (6), in dieser bevorzugten Ausführung ist die Koppelstange ein Pneumatikzylinder (7), drehbar angebracht. Über die Koppelstange (6) ist die Wippe (3) mit dem Exzenterantrieb (4) verbunden. Die Koppelstange (6) ist am Exzenter (4) ebenfalls drehbar gelagert. Der Hub des Exzenters (4) bewirkt somit eine Schwenkbewegung der Wippe (3). In dieser vorteilhaften Ausführung ist der Exzenter mit einem Elektromotor (8) angetrieben. Es sind hier auch andere Antriebe vorstellbar wie zum Beispiel pneumatische- oder hydraulische Antriebe.

Am unteren Ende der Wippe (3) ist eine Klinge (9) befestigt. Die Klinge (9) hat eine Schneidkante (10), die in dieser besonders vorteilhaften Ausführung wellenförmig ist. Es ist aber jede andere beliebige Form, wie zum Beispiel gerade oder sichelförmig vorstellbar. Die Klinge (9) ist U-förmig gebogen. Durch Ändern der Schenkellänge (11) kann der Abstand der Klinge zum Boden eingestellt werden. Dieser Abstand der Klinge zum Boden ist je nach Erntegut unterschiedlich gestaltet. Es ist aber ebenso denkbar, dass die Klinge (9) zum Beispiel über eine Stellschraube in der Höhe justiert werden kann. Da es sich bei der Klinge um ein Verschleißteil handelt und sie deshalb regelmäßig gewechselt werden muss, ist die dargestellte Variante der Höhenanpassung mittels geänderter Schenkellänge (11) die bevorzugte Bauform. Diese Bauform ist zum einen kostengünstiger und zum anderen ist sie weniger anfällig gegen Verschmutzung.

Mit Hilfe des Pneumatikzylinders (7) kann die Wippe (3) und somit die mit der Wippe (3) verbundene Klinge (9) aus der Arbeitsstellung geschwenkt werden. Es ist dadurch möglich, das Abernten zu unterbrechen.

Die Vorrichtung (1) wird mit möglichst kurzen Auflagen (12) auf dem Beet geführt, um eine Anpassung an den Boden zu erreichen und dadurch die Klinge in einem nahezu gleichen Abstand zum Boden zu führen.

Am Grundrahmen (2) ist des Weitern ein Befestigungsblech (13) befestigt. Das Befestigungsblech (13) dient zur Aufnahme des Sensors (14). Mit Hilfe des Sensors (14) kann der Bewuchs des Beets zwischen zu erntenden Pflanzen und ungeeigneten Pflanzen unterschieden werden. Der Sensor ist in dieser vorteilhaften Ausführung geeignet, den Farbunterschied der Pflanzen zu bestimmen. Es ist aber genau so vorstellbar, andere Eigenschaften der Pflanzen wie Größe, Form, Temperatur, Feuchtegehalt oder Ähnliches zu erkennen und aus einzelnen Merkmalen oder aus einer Kombination von Merkmalen unterschiedliche Pflanzen zu erkennen. Eine geeignete Steuerung kann diese Information dazu verwenden, das Schneidmesser (9) mit Hilfe des Pneumatikzylinders (7) aus der Arbeitsstellung zu schwenken.

Die Fig. 2 zeigt eine perspektivische Ansicht eines "Verfahrens zum Ernten von Gemüse und Salaten". Die Abbildung zeigt eine schematische Darstellung eines Beetes (15) mit Planzen (16). Um unterschiedliche Pflanzen (17) und (18) darstellen zu können, wurden für diese Pflanzen Kegel und Pyramiden zur Unterscheidung verwendet. Die als Kegel dargestellten Pflanzen (17) stellen das Erntegut dar. Die als Pyramiden dargestellten Pflanzen (18) stellen ungewollten Bewuchs dar. Das Erntegut (17) ist in Pflanzreihen (19) gepflanzt. Zwischen den Pflanzreihen (19) ist der Bewuchs mit nicht erwünschten Pflanzen (18) dargestellt. Der ungewollte Bewuchs (18) kann jedoch auch zusätzlich in den Reihen (19) wachsen. Durch Witterungseinflüsse kann das Beet (15), anders als in der Darstellung, uneben sein oder sich in Längs- und Querrichtung neigen.

Nach dem Stand der Technik sind die Einrichtungen zum Schneiden von zum Beispiel Salat eine durchgehende Klinge oder einzelne Klingen, die auf einem, über das gesamte Beet reichenden, Rahmen befestigt sind oder einzelne Schneideinrichtungen, die mittels einem Sensor und einer geeineten Steuerung in der Höhe angepasst werden. Diese Einrichtungen zum Schneiden von Salat richten sich nach dem geringsten Abstand zwischen Klinge und Boden aus. Durch diese Ausrichtung wird verhindert, dass die Klinge in den Boden schneidet und beschädigt wird. Speziell im Freilandanbau mit zum Teil, durch Witterungseinflüsse bedingt, sehr unebenen Beeten bewirkt dies, dass die Schneideinrichtung doch in den Boden schneidet und dadurch beschädigt wird oder bei sich bewegenden Klingen Steine herausgeschleudert und dadurch Pesonen gefährdet werden. Alternativ kann dies durch einen großen Abstand zum Boden ausgeglichen werden, wobei dann sehr häufig das Erntegut zu weit über dem Boden geschnitten wird und dadurch eine schlechte Qualität aufweist. Um das Eintauchen der Schneideinrichtung in den Boden oder ein zu hohes Abschneiden des Ernteguts zu verhindern, werden die Schneideinrichtungen mittels eines geeigeten Sensors und einer dazu eingerichteten Steuerung einzeln in der Arbeitshöhe gesteuert.

Das erfindungsgemäße Verfahren verwendet für jede Pflanzenreihe (16) eine eigene Schneidvorrichtung (1). Die Vorrichtungen (1) können sich dadurch sowohl in Längsrichtung als auch in der Querrichtung des Beetes durch die möglichst eng an den Pflanzreihen (16) angebrachten Kufen (12) einzeln an den Boden anpassen. Statt der Kufen sind auch andere möglichst eng an den Pflanzreihen (16) angebrachte Auflagen wie zum Beispiel schwenkbare Fahrwerke vorstellbar. Es ist hier ebenso vorstellbar, die Vorrichtungen (1) an einem Gesamtrahmen zu befestigen, so dass die Position der Vorrichtung in vertikaler Richung aber auch in der Neigung in Längs- und Querrichtung sich dem Boden anpassen kann. Die Aufgabe des Grundrahmens ist in dieser Variante einen gemeinsamen Vorschub in Längsrichtung in Richtung der Pflanzreihen (16), zum Beispiel durch eine landwirtshaftliche Zugmaschine zu ermöglichen oder aber auch die Einzelvorrichtung in eine Transportstellung, zum Beispiel für den Straßentransport, zu bringen. Statt der einzelnen elektrischen Antriebe (8) ist es auch denkbar eine gemeinsame Antriebswelle einzusetzen. Der speziell im Freilandanbau, im Unterschied zum Gewächshausanbau, vermehrt auftretende Bewuchs mit Unkraut (18) kann durch das erfindungsgemäße Verfahren gezielt von der Ernte ausgeschlossen werden. So werden zum einen, durch die in den Pflanzreihen (16) geführten Messer (9), nicht der Bewuchs zwischen den Pflanzreihen (16) abgeschnitten, zum anderen werden mit Hilfe der Sensoren (14) Erntegut (17) und Unkraut oder ungewolltem Bewuchs (18) unterschieden. Durch eine geeignete Einrichtung wie in der beispielhaften Vorrichtung (1) Pneumatikzylinder (7) und Wippe (3) kann die Klinge (9) aus der Arbeitsposition gebracht werden. Es ist dadurch möglich, Bereiche der Pflanzreihen gezielt nicht abzuernten, um so zu vermeiden, dass Unkraut oder ungewollter Bewuchs (18) mit Erntegut (17) vermischt wird. Eine geeignete Aufnahmevorrichtung wie sie aus dem Stand der Technik bekannt ist, ist dadurch in der Lage, nur loses Erntegut (17) aufzunehmen. Es ist aber auch vorstellbar, mit mehreren zusätzlichen Klingen (9), in einem der Ernte vorauseilenden Arbeitsgang das Unkraut oder ungewollter Bewuchs (18) permanent zwischen den einzelnen Pflanzreihen (16) und mittels einer beispielhaften Vorrichtung (1) gezielt in den Pflanzreihen (16) abzuschneiden. Das beispielsweise abgeschnittene Unkraut kann dadurch mit einer aus dem Stand der Technik bekannten Einrichtung entfernt werden, bevor das Erntegut (17) durch weitere Vorrichtungen (1) abgeschnitten wird. Besonders vorteilhaft ist dabei, dass die Qualität der Pflanzreihen in Bezug auf Bewuchs mit Unkraut (18) weiterhin erkannt wird und die Klinge (9) bei im ersten Arbeitsgang nicht erkannten Unkrautbewuchs (18) innerhalb der Pflanzreihen (16) aus der Arbeitsposition gebracht werden kann. Es ist hier vorstellbar, die Unterscheidung zwischen Erntegut (17) und Unkraut (18) zu optimieren indem im zweiten Arbeitsgang ein unterschiedlicher Sensor (14) verwendet wird.

## Patentansprüche

1. Ein Verfahren zum Ernten von Gemüse und Salaten, **dadurch gekennzeichnet, dass** mittels mindestens einer quer zur Ernterichtung möglichst schmalen Schneideinheit, um eine einzelne Pflanzreihe abernten zu können, das Erntegut von der Wurzel getrennt wird und diese Schneideinheiten durch seitliche, möglichst kurze, in einem möglichst geringen Seitenabstand zur Pflanzreihe angebrachten, in der Höhe einstellbare Auflagen geführt ist, um die Schnitthöhe der Schneideinheit zum Boden an Bodenunebenheiten anzupassen.

2. Ein Verfahren zum Ernten von Gemüse und Salaten nach Anspruch 1, **dadurch gekennzeichnet, dass** über mindestens einen verwendeten Sensor Erntegut und ungewollter Bewuchs unterschieden wird und dass die Schneideinheit mittels einer geeigneten Einrichtung gezielt Erntegut oder ungewolltem Bewuchs abschneidet.

3. Ein Verfahren zum Ernten von Gemüse und Salaten nach Anspruch 1, **dadurch gekennzeichnet, dass** in einem ersten Arbeitsgang der ungewollte Bewuchs zwischen den Pflanzreihen abgeschnitten und durch eine geeignete Einrichtung entfernt wird und anschließend die Pflanzreihen abgeerntet werden.

4. Ein Verfahren zum Ernten von Gemüse und Salaten nach Anspruch 3, **dadurch gekennzeichnet, dass** im selben vorangestellten Arbeitsgang der ungewollte Bewuchs in den Pflanzreihen erkannt und abgeschnitten wird.

5. Ein Verfahren zum Ernten von Gemüse und Salaten nach einem der Ansprüche 1 bis 4, **dadurch gekennzeichnet, dass** der ungewollte Bewuchs von einer vorteilhafterweise Saugeinrichtung entfernt wird.

6. Verfahren zum Ernten von Gemüse und Salaten nach einem der Ansprüche 1 bis 5, **dadurch gekennzeichnet, dass** die Auflagen mindestens drei Rollen sind, wobei mindestens zwei Auflagerollen auf der einen Seite der Pflanzreihe sind und mindestens eine Rolle auf der gegenüberliegenden Seite der Pflanzreihe ist.

7. Verfahren zum Ernten von Gemüse und Salaten nach Anspruch 6, **dadurch gekennzeichnet, dass** die Auflagerollen mindestens zu zwei Rollen als Fahrwerk zusammengefasst werden und dieses Fahrwerk schwenkbar am Grundrahmen der Vorrichtung angebracht ist.

8. Ein Verfahren zum Ernten von Gemüse und Salaten nach einem der Ansprüche 1 bis 4, **dadurch gekennzeichnet, dass** die Unterscheidung zwischen Erntegut und ungewolltem Bewuchs mittels unterschiedlicher Sensoren erreicht wird.

9. Ein Verfahren zum Ernten von Gemüse und Salaten nach einem der Ansprüche 1 bis 6 und 8, **dadurch gekennzeichnet, dass** die Auflagen Kufen sind.
